# FASCICULE DE BREVET EUROPEEN

(11) **EP 1 798 445 B1**
(45) Date de publication et mention de la délivrance du brevet: **21.01.2009**
(21) Numéro de dépôt: 06301172.0
(22) Date de dépôt: 23.11.2006
(51) Int. Cl.: F16H 3/093, F16H 3/10

(54) **Boîte de vitesses manuelle ou robotisée à passage sous couple à quatre arbres parallèles**
Manuelles oder automatisiertes Lastschaltgetriebe mit vier parallelen Wellen
Manual or automated powershift transmission with four parallel shafts

(30) Priorité: 16.12.2005 FR 0553920
(43) Date de publication de la demande: 20.06.2007
(73) Titulaire: RENAULT S.A.S., 92100 Boulogne Billancourt (FR)
(72) Inventeur: Raoul, Michel, 78990 Elancourt (FR); Rodrigues, Philippe, 78570 Andresy (FR)

(56) Documents cités:
- EP-A- 1 067 312
- EP-A- 1 273 825
- EP-A- 1 443 244
- EP-A- 1 479 941
- FR-A- 2 789 742
- FR-A- 2 819 570
- FR-A- 2 821 652
- FR-A- 2 841 956
- FR-A- 2 855 229
- FR-A- 2 869 571
- US-A- 4 461 188
- US-A- 5 333 512
- PATENT ABSTRACTS OF JAPAN vol. 2002, no. 02, 2 avril 2002 (2002-04-02) -& JP 2001 295898 A (AICHI MACH IND CO LTD), 26 octobre 2001 (2001-10-26)

## Description

L'invention concerne une boîte de vitesses manuelle ou robotisée de véhicule automobile.

Elle concerne plus particulièrement une boîte de vitesses à arbres parallèles et à engrenages comprenant un arbre primaire et deux arbres secondaires non concentriques entraînant la même couronne de différentiel.

Plus précisément, elle a pour objet une telle boîte de vitesses comportant un ensemble de dentures fixes et deux arbres secondaires non concentriques qui portent des pignons fous engrenant avec lesdites dentures fixes et susceptibles d'être couplés sélectivement avec l'arbre qui les porte par des dispositifs de couplage pour engager les différents rapports de la boîte, le premier arbre secondaire portant un pignon de descente attaquant directement une couronne de différentiel tandis que le second entraîne cette même couronne par l'intermédiaire d'un arbre de renvoi intermédiaire sur le premier arbre secondaire par l'intermédiaire du même pignon de descente.

Selon une disposition connue dans la publication EP 1 479 941, qui décrit toutes les caractéristiques du préambule de la revendication indépendante 1, dans une boîte de vitesses comportant un arbre primaire relié au moteur par un embrayage d'entrée, et deux arbres secondaires non concentriques, le premier arbre secondaire peut porter un pignon de descente attaquant directement une couronne de différentiel, tandis que le second arbre secondaire entraîne cette même couronne par l'intermédiaire d'un arbre de renvoi intermédiaire sur le premier arbre secondaire par l'intermédiaire du même pignon de descente.

La présente invention vise à obtenir six rapports de marche avant avec des passages de vitesse sous couple dans une boîte de vitesses comprenant un seul arbre primaire et deux arbres secondaires, où un dispositif de synchronisation et de crabotage est disposé entre les pignons fous de première et de marche arrière, et où les dispositifs de couplage des pignons fous des rapports de rang supérieur à un, sont des coupleurs coniques auto assistés, les pignons fous des rapports de rang supérieur à un de même parité étant groupés par deux à l'exception du pignon fou de deuxième qui est isolé.

Ces dispositions permettent d'obtenir six rapports de marche avant.

Selon une disposition préférée, le couplage des pignons fous des rapports de marche avant supérieurs à un, est obtenu à l'aide de coupleurs coniques auto-assistés, tels que décrit dans la publication FR 2 821 652.

Un dispositif de couplage classique avec synchroniseur est toutefois disposé entre les pignons fous de première et de marche arrière. Enfin, une roue libre peut être intercalée entre le fût et le crabot du pignon fou de première, selon une disposition telle que décrite dans la publication EP 1 273 825.

D'autres caractéristiques et avantages de l'invention apparaîtront clairement à la lecture de la description suivante d'un mode de réalisation particulier de celle-ci, en se référant aux dessins annexés sur lesquels :
- la figure 1 est une vue schématique en coupe à plans rabattus passant par les axes des arbres secondaire auxiliaire, primaire et secondaire principal,
- la figure 2 est une vue schématique en coupe à plans passant par les axes des arbres secondaire auxiliaire, intermédiaire de marche arrière, primaire et secondaire principal,
- les figures 3 et 4, correspondant respectivement aux figures 1 et 2, indiquent les pignons utilisés sur chaque rapport.

La boîte de vitesses 10 illustrée par les figures, comporte un premier arbre primaire plein 20 monté à rotation dans un carter (non représenté) et entraîné par un moteur, par l'intermédiaire d'un embrayage 40 de type classique simple sec ou humide. La boîte de vitesses comporte aussi un premier arbre secondaire 50 dit principal et un deuxième arbre secondaire 60, dit auxiliaire, également montés à rotation dans le carter.

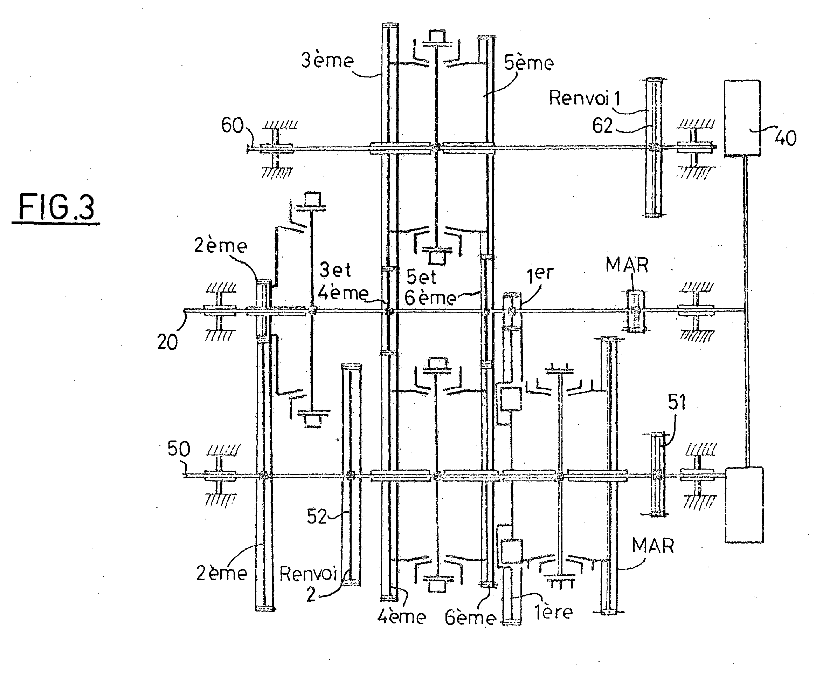

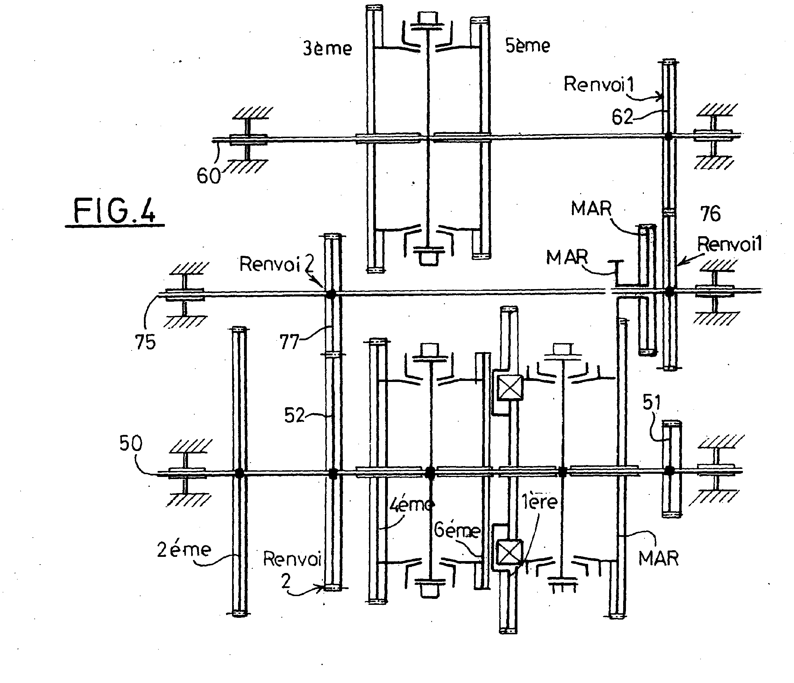

Des engrenages sont agencés entre l'arbre primaire 20 et les arbres secondaires 50 et 60, de manière à transmettre le couple du véhicule à la couronne d'un différentiel (non représenté) entraînant les roues d'un véhicule. A cet effet, seul le premier arbre secondaire 50 comporte un pignon de descente 51 qui engrène avec la couronne du différentiel. Le deuxième arbre secondaire 60 est lié en rotation au premier par un arbre de renvoi 75 portant des pignons fixes 76 et 77 engrenant avec les pignons fixes 62 et 52 portées respectivement par les arbres secondaires 60 et 50 (cf. renvois 1 et 2 sur les figures 3 et 4).

Les engrenages sont constitués de dentures fixes 21, 22, 23, 24, et de la denture du pignon fou 25 portés par l'arbre primaire 20, qui engrènent avec des pignons fous et un pignon fixe qui sont portés par les arbres secondaires 50 et 60. Ces pignons fous sont susceptibles d'être sélectivement liés en rotation aux premier et second arbres secondaires et inversement pour la denture 25, 50 et 60 par des moyens de couplage de type coupleur conique auto assisté ou des dispositifs de synchronisation et de crabotage classiques. Ces dispositifs permettent de réaliser des engrenages indépendants correspondant sélectivement à au moins deux rapports de marche avant, ou à un rapport de marche avant et au rapport de marche arrière.

La seconde denture 21 de l'arbre 20 engrène avec un unique pignon fou 81 monté sur une roue libre 810, porté par le premier arbre secondaire 50, pour constituer le rapport de première. La première denture 22 engrène avec un seul pignon, le pignon 90 intermédiaire de marche arrière porté par l'arbre intermédiaire 75, dont le pignon intermédiaire 91 lié au pignon 90 engrène avec le pignon 82 porté par le premier arbre secondaire 50 pour constituer le rapport de marche arrière.

La troisième denture fixe 23 engrène avec deux pignons fous 83 et 93, portés respectivement par l'arbre secondaire principal 50 et l'arbre secondaire auxiliaire 60, pour constituer respectivement les rapports de sixième et de cinquième. Le quatrième pignon fixe 24 engrène avec un pignons fous 84 et 94, portés respectivement par l'arbre secondaire principal 50 et l'arbre secondaire auxiliaire 60, pour constituer le rapport de quatrième et de troisième. Sans sortir du cadre de l'invention, la disposition des groupes de vitesses sur chaque arbre peut aussi être inversée. Toutefois, la quatrième et la sixième sont toujours sur le premier arbre secondaire 50 (arbre secondaire principal), et la troisième et cinquième sur le deuxième arbre secondaire 60 (arbre secondaire auxiliaire).

Enfin, la cinquième denture montée en pignon fou 25 sur l'arbre primaire 20 engrène avec un pignon fixe 85, porté par l'arbre secondaire 50, pour constituer le rapport de deuxième. Le rapport de marche arrière a son propre pignon fou 82, porté par le premier arbre secondaire 50, qui engrène avec un second pignon intermédiaire 91, porté par l'arbre intermédiaire 75, lié en rotation avec le premier pignon intermédiaire 90 qui engrène avec la denture fixe 22.

En résumé, l'arbre primaire porte plusieurs dentures fixes 22, 21, 23, 24, et un pignon fou 25, engrenant avec des pignons fous et des pignons fixes de l'un ou l'autre des arbres secondaires. Parmi les dentures fixes du primaire 50, une première denture 21 engrène avec un pignon fou de marche avant (pignon de première 81), une deuxième denture 22 engrène avec le pignon intermédiaire de marche arrière 90, et deux dentures fixes 23, 24 engrènent simultanément avec pignon fou de chacun des arbres secondaires 83, 93 ; 84, 94. Cette disposition permet d'obtenir au moins six rapports de marche avant et un rapport de marche arrière.

Les pignons fous 25, 84, 83, 93, 94 peuvent être sélectivement liés aux arbres secondaires et primaires qui les portent, par des dispositifs de couplage particulier, tels que des coupleurs coniques auto-assistés illustrés par la publication FR 2821 652. Les pignons fous 81 et 82 peuvent être sélectivement liés à l'arbre secondaire principal 50 qui les porte, par des dispositifs de crabotage simple ou double. Il est important de noter que le pignon fou 81 est équipé d'une roue libre 810.

Les pignons fous 81, 82, 83 et 84 peuvent être liés sélectivement à l'arbre secondaire 50 qui les porte, et les pignons fous 93 et 94 peuvent être sélectivement liés à l'arbre secondaire 60 qui les porte.

Un premier dispositif de crabotage double 100 , permet de lier sélectivement en rotation à l'arbre secondaire 50, le pignon fou 81, pour obtenir le rapport de première, ou le pignon fou 82, pour obtenir le rapport de marche arrière. Un premier dispositif de couplage double 101 (coupleur conique auto assisté) permet de lier en rotation à l'arbre secondaire 50 le pignon fou 84, pour obtenir le rapport de quatrième, ou le pignon fou 83 pour obtenir le rapport de sixième.

Un second dispositif de couplage double 102, identique au premier, permet de lier sélectivement en rotation à l'arbre secondaire 60 le pignon fou 94 pour obtenir le rapport de troisième, ou le pignon fou 93 pour obtenir le rapport de cinquième. Enfin, un troisième dispositif de couplage simple 103, permet de lier sélectivement en rotation à l'arbre primaire 20 le pignon fou 25, pour obtenir le rapport de deuxième.

Ces dispositifs permettent d'obtenir l'ensemble des six rapports avant et le rapport de marche arrière. Le groupement des pignons de même parité, et le rapport de deuxième isolé, permettent de réaliser un passage sous couple entre les rapports qui se suivent ou une rupture de couple pour les sauts de rapports avec le fait que le rapport de première reste toujours enclenché grâce à la présence de la roue libre sur ce même rapport.

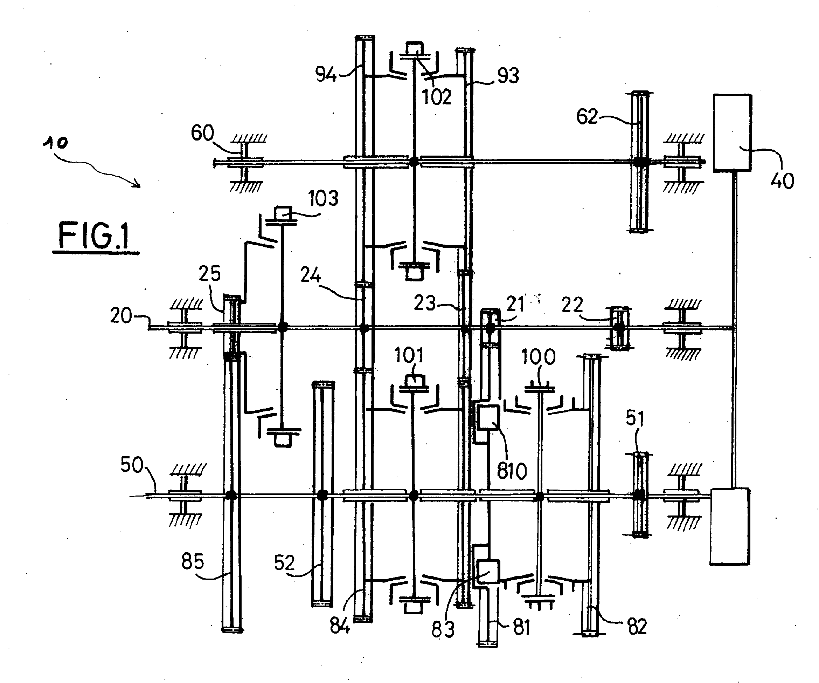

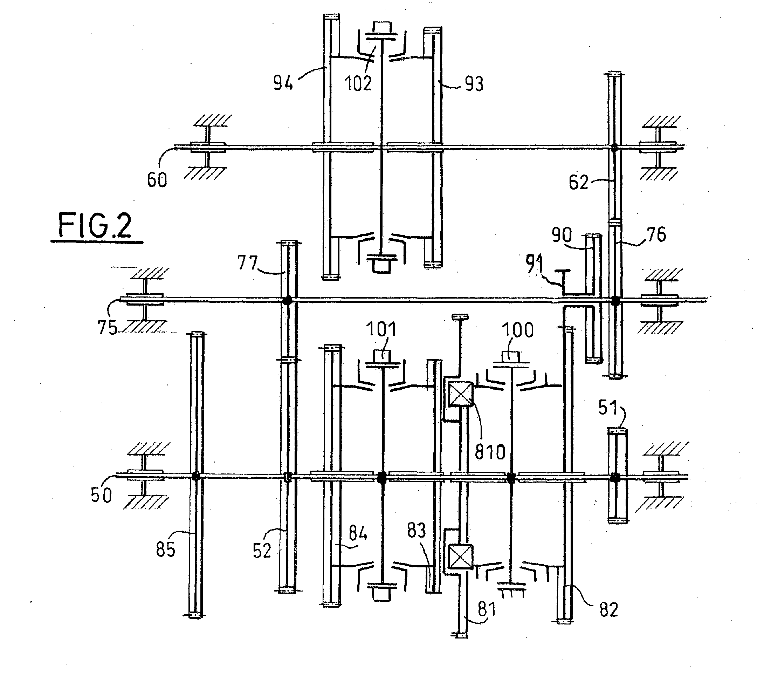

On remarque sur les figures 1 et 2 que les pignons de renvoi 76 et 62, sont disposés dans la même tranche axiale que le pignon de descente 51. La boîte de vitesses proposée par l'invention est donc aussi compacte qu'une boîte de vitesses conventionnelle à deux arbres secondaires ayant chacun un pignon d'attaque.

Les distances entre l'axe de l'arbre primaire 20 et l'axe de chaque arbre secondaire 50, 60 peuvent être différentes. Dans le cadre de l'invention, elles sont de préférence identiques, à condition de choisir également des dispositifs de couplage identiques, car cette disposition permet d'utiliser les mêmes pignons fous. Les pignons 93 du rapport de cinquième et 83 du rapport de sixième peuvent donc être identiques ainsi que les pignons 84 et 94 pour respectivement les rapports de quatrième et troisième.

L'invention propose que les roues dentées 52 du premier arbre secondaire 50, 62 du deuxième arbre secondaire 60 et 76, 77 de l'arbre de renvoi des rapports aient un nombre de dents appropriés pour obtenir des rapports différents à partir d'une même denture pignon fixe engrenant avec deux pignons fous identiques.

On peut décider, par exemple, que les nombres de dents combinés des pignons 62 et 76 d'une part et 77 et 52 d'autre part peuvent donnent un rapport de réduction significatif pour obtenir les rapports de sixième et de cinquième à partir de la même dent ure fixe 23 et de pignons fous 83 et 93 identiques. De façon analogue, on peut obtenir les rapports de quatrième et de troisième à part ir d'une seule dent ure fixe 24, et de pignons fous identiques 84, 94.

En se référant à la figure 2 et à la figure 1, le cheminement du couple du moteur à la couronne de différentiel selon le rapport de marche arrière est le suivant. Le couple est transmis du moteur à l'arbre primaire 20 par l'embrayage 40 fermé. Puis, de la denture fixe 22 au premier pignon intermédiaire de marche arrière 90 lié au second pignon intermédiaire 91, puis du second pignon intermédiaire de marche arrière 91 au pignon fou 82 de marche arrière qui le transmet à l'arbre secondaire 50 par l'intermédiaire du crabot double 100 en position crabotée sur le pignon 82 de l'arbre secondaire principal 50 qui le transmet, par l'intermédiaire du pignon de descente 51 à la couronne du différentiel (non représentée).

Le cheminement du couple du moteur à la couronne de différentiel selon le rapport de première est le suivant. Le couple est transmis du moteur à l'arbre primaire 20 par l'embrayage 40 fermé, puis de la denture fixe 21 au pignon fou 81, puis du pignon fou 81 à l'arbre secondaire 50 par le crabot double 100 en position craboté sur le pignon 81, et enfin, de l'arbre secondaire 50 au pignon fixe 51 qui le transmet à la couronne.

Le cheminement du couple du moteur à la couronne de différentiel selon le rapport de deuxième est le suivant. Le couple est transmis du moteur à l'arbre primaire 20 par l'embrayage 40 fermé, puis du pignon fou 25 couplé à l'arbre primaire 20, via le dispositif de couplage 103 (par exemple un coupleur conique auto assisté), couplé au pignon fixe 85, puis du pignon fixe 85 à l'arbre secondaire 50, et enfin, de l'arbre secondaire 50 au pignon fixe 51 qui le transmet à la couronne.

Le cheminement de couple pour le rapport de troisième est le suivant. Le couple est transmis du moteur à l'arbre primaire 20 par l'embrayage 40 fermé. Puis de la denture fixe 24 au pignon fou 94, qui transmet le couple à l'arbre secondaire auxiliaire 60 par l'intermédiaire du dispositif de couplage double 102. Du pignon fixe 62 de l'arbre renvoi 75, le mouvement passe au pignon fixe 77 de ce même arbre, vers le pignon fixe 52 de l'arbre secondaire principal 50, qui transmet le couple par l'intermédiaire du pignon de descente 51 à la couronne.

Le cheminement de couple est similaire pour le rapport de cinquième. Pour le rapport de quatrième, le couple est transmis du moteur à l'arbre primaire 20 par l'embrayage 40 fermé. Puis, il passe de la denture fixe 24 au pignon fou 84, qui transmet le couple à l'arbre secondaire principal 50 par l'intermédiaire du dispositif de couplage double 101, qui transmet le couple par l'intermédiaire du pignon de descente 51 à la couronne. Le cheminement de couple est similaire pour le rapport de sixième.

En conclusion, il faut souligner que l'invention permet de réaliser une boîte de vitesse à quatre arbres (un arbre primaire, deux arbres secondaires et un arbre de renvoi intermédiaire) particulièrement compacte, permettant de disposer de six rapports de marche avant à passages sous couple, notamment grâce à la disposition particulière des pignons fous sur les arbres, à l'utilisation judicieuse de coupleurs coniques auto-assistés, et au montage de la première sur une roue libre.

## Revendications

1. Boîte de vitesses à arbres parallèles à engrenages, comprenant un seul arbre (40) primaire (20) relié au moteur par un seul embrayage d'entrée (40) portant un ensemble de dentures fixes (21, 22, 23, 24), et deux arbres secondaires non concentriques (50, 60) qui portent des pignons fous engrenant avec lesdites dentures fixes et susceptibles d'être couplés sélectivement avec l'arbre qui les porte par des dispositifs de couplage pour engager les différents rapports de la boîte, le premier arbre secondaire portant un pignon de descente (51) attaquant directement une couronne de différentiel tandis que le second (60) entraîne cette même couronne par l'intermédiaire d'un arbre de renvoi intermédiaire (75) sur le premier arbre secondaire (50) par l'intermédiaire du même pignon de descente (51), **caractérisée en ce que** les passages de vitesses sont réalisés sous couple, **en ce qu'**un dispositif de synchronisation et de crabotage (100) est disposé entre les pignons fous de première (81) et de marche arrière (82), et **en ce que** les dispositifs de couplage (101, 102, 103) des pignons fous des rapports de rang supérieur à un, sont des coupleurs coniques auto assistés, les pignons fous des rapports de rang supérieur à un de même parité (83, 84 ; 93, 94) étant groupés par deux à l'exception du pignon fou de deuxième (25) qui est isolé.

2. Boîte de vitesses selon la revendication 1, **caractérisée en ce que** le pignon fou de première (81) est monté sur une roue libre (810).

3. Boîte de vitesses selon la revendication 1 ou 2, **caractérisée en ce que** le pignon fou de deuxième (25) est porté par l'arbre primaire (20).

4. Boîte de vitesses selon l'une des revendications précédentes, **caractérisée en ce que** le coupleur conique du rapport de deuxième (103) est porté par l'arbre primaire (20), tandis que les autres coupleurs coniques (101, 102) sont agencés sur les deux arbres secondaires (50, 60).

5. Boîte de vitesses selon l'une des revendications précédentes, **caractérisée en ce que** les pignons fous de première (81), de marche arrière (82), des rapports pairs de rang supérieur à deux (83, 84) ainsi que le pignon fixe de deuxième (85) sont sur le premier arbre secondaire (50), tandis que les pignons fous (93, 94) des rapports impairs de rang supérieur à un sont sur l'autre arbre secondaire (60).

6. Boîte de vitesses selon l'une des revendications précédentes, **caractérisée en ce que** chaque arbre secondaire (50, 60) porte un pignon de renvoi (52, 62) sur l'arbre intermédiaire (75).

## Claims

1. Parallel shaft gearbox with gears comprising a single primary shaft (20) connected to the engine by a single input clutch (40) carrying a set of fixed gears (21, 22, 23, 24), and two non-concentric layshafts (50, 60) which carry idle gears meshing with the said fixed gears and able to be selectively coupled with the shaft which carries them by coupling devices to engage the various gear ratios of the gearbox, the first layshaft carrying a step down gear (51) directly driving a crown wheel, while the second (60) drives this same crown wheel via an intermediate countershaft (75) on the first layshaft (50) via the same step down gear (51), **characterized in that** the gear changes are carried out without disengaging the clutch, **in that** a synchronizing and dog clutch device (100) is disposed between the idle gears of first gear (81) and reverse (82), and **in that** the coupling devices (101, 102, 103) of the idle gears of the gear ratios higher than first are springloaded conical synchronizers, the idle gears of the gear ratios of the same parity higher than first (83, 84 ; 93, 94) being grouped in twos with the exception of the second gear idle gear (25) which is on its own.

2. Gearbox according to Claim 1, **characterized in that** the first gear idle gear (81) is mounted on a free wheel (810).

3. Gearbox according to Claim 1 or 2, **characterized in that** the second gear idle gear (25) is carried by the primary shaft (20).

4. Gearbox according to one of the preceding claims, **characterized in that** the second gear ratio conical synchronizer (103) is carried by the primary shaft (20), while the other conical synchronizers (101, 102) are arranged on the two layshafts (50, 60).

5. Gearbox according to one of the preceding claims, **characterized in that** the idle gears of first gear (81), reverse (82), and the even-numbered gear ratios higher than second (83, 84) as well as the second gear fixed gear (85) are on the first layshaft (50), while the idle gears (93, 94) of odd-numbered gear ratios higher than first are on the other layshaft (60).

6. Gearbox according to one of the preceding claims, **characterized in that** each layshaft (50, 60) carries a countershaft (52, 62) on the intermediate shaft (75).

## Patentansprüche

1. Getriebe mit parallelen Getriebewellen, umfassend eine einzige Eingangswelle (20), die durch eine einzige, eine Anordnung aus feststehenden Verzahnungen (21, 22, 23, 24) aufweisende Eingangskupplung (40) mit dem Motor verbunden ist, und zwei nicht konzentrische Ausgangswellen (50, 60), die Losräder aufweisen, welche mit den feststehenden Verzahnungen in Eingriff stehen und gezielt mit der Welle verbunden werden können, die sie durch Verbindungsvorrichtungen trägt, um die verschiedenen Gänge des Getriebes einzulegen, wobei die erste Ausgangswelle ein Untersetzungsrad (51) trägt, das direkt auf ein Differential-Tellerrad einwirkt, während die zweite (60) dieses Tellerrad über eine Zwischenvorgelegewelle (75) auf der ersten Ausgangswelle (50) durch das gleiche Untersetzungsrad (51) antreibt, **dadurch gekennzeichnet, dass** die Schaltvorgänge unter Last erfolgen, dass eine Synchronisier- und Klauenkupplungseinrichtung (100) zwischen den Losrädern des ersten Gangs (81) und des Rückwärtsgangs (82) angeordnet ist, und dass die Verbindungsvorrichtungen (101, 102, 103) der Losräder der Gänge größer als eins selbstunterstützte Kegelverbinder sind, wobei die Losräder der Gänge größer als eins bei gleicher Parität (83, 84; 93; 94) mit Ausnahme des Losrads des zweiten Gangs (25), das isoliert ist, paarweise gruppiert sind.

2. Getriebe nach Anspruch 1, **dadurch gekennzeichnet, dass** das Losrad des ersten Gangs (81) an einem Freilauf (810) angebracht ist.

3. Getriebe nach Anspruch 1 oder 2, **dadurch gekennzeichnet, dass** das Losrad des zweiten Gangs (25) von der Eingangswelle (20) getragen wird.

4. Getriebe nach einem der vorhergehenden Ansprüche, **dadurch gekennzeichnet, dass** der Kegelverbinder des zweiten Gangs (103) von der Eingangswelle (20) getragen wird, während die anderen Kegelverbinder (101, 102) auf den beiden Ausgangswellen (50, 60) angeordnet sind.

5. Getriebe nach einem der vorhergehenden Ansprüche, **dadurch gekennzeichnet, dass** sich die Losräder des ersten Gangs (81), des Rückwärtsgangs (82), der geradzahligen Gänge größer als zwei (83, 84) sowie das Festrad des zweiten Gangs (85) auf der ersten Ausgangswelle (50) befinden, während sich die Losräder (93, 94) der ungeradzahligen Gänge größer als eins auf der anderen Ausgangswelle (60) befinden.

6. Getriebe nach einem der vorhergehenden Ansprüche, **dadurch gekennzeichnet, dass** jede Ausgangswelle (50, 60) ein Vorgelegerad (52, 62) auf der Zwischenwelle (75) trägt.
